**Europäisches Patentamt**

**European Patent Office**

**Office européen des brevets**

(19)

(11) Publication number: **0 029 536**

**A1**

(12) **EUROPEAN PATENT APPLICATION**

(21) Application number: **80106871.9**

(22) Date of filing: **07.11.80**

(51) Int. Cl.³: **C 01 C 1/10**

(30) Priority: **19.11.79 US 95590**
**15.09.80 US 187581**

(43) Date of publication of application:
**03.06.81 Bulletin 81/22**

(84) Designated Contracting States:
**BE DE FR GB NL**

(71) Applicant: **STERLING DRUG INC.**
**90 Park Avenue**
**New York New York(US)**

(72) Inventor: **Chowdhury, Ajit Kumar**
**4713 Mesker Street**
**Schofield Wisconsin(US)**

(72) Inventor: **Bauer, Gerald Lee**
**909 Woodward Avenue**
**Rothschild Wisconsin(US)**

(74) Representative: **Baillie, Iain Cameron et al,**
**c/o Ladas & Parry Blumenstrasse 48**
**D-8000 München 2(DE)**

(54) Process for removing and recovering ammonia from aqueous liquors.

(57) Ammonia values are removed and recovered from aqueous ammonia liquors by adjusting to pH 9-12 and stripping ammonia from the liquors with an inert gas at 70-185°F. and at or near atmospheric pressure, flowing countercurrent to the liquors. The ammonia is subsequently absorbed into an aqueous acidic solution by contacting the ammonia carrying inert gas with an acidic solution. The temperature of the absorber is maintained at 1-36°F. higher than the stripper temperature. The inert gas from the absorber is recycled to the stripper to remove ammonia continuously in a closed system. Sulfuric acid, phosphoric acid or other acids may be used in the absorption. The process recovers ammonia from dilute ammonia liquors as ammonium salts, aqua ammonia or anhydrous ammonia.

./...

EP 0 029 536 A1

Croydon Printing Company Ltd.

Process for Removing and
Recovering Ammonia from
Aqueous Liquors


This invention relates to the recovery of ammonia
from aqueous liquors, more specifically to an improved
process for removal and recovery of ammonia from aqueous
ammonia containing wastes such as animal feed lot wastes,
anaerobic digester supernatants, coking liquors, coal
gasification waste liquors, acrylonitrile production wastes
and the like. The ammonia values are recovered as an
ammonium salt e.g. ammonium sulfate, as concentrated
aqueous ammonia or as anhydrous ammonia.

Processes are known for removal of ammonia from
dilute aqueous solutions by stripping with an inert gas
such as air, nitrogen or the like and then extracting the
ammonia from the gas by absorption in an acidic medium.
The gas, after passing through the ammonia absorbing medium
is recycled so that the stripping is performed in a closed
loop. The stripping is performed at pH 10.5-11.5 and at
140-180°F. The pH of the aqueous waste is adjusted by adding caustic soda solution. A commonly used acidic medium
for absorption of ammonia from the gas is aqueous sulfuric
acid. During absorption the acid solution is recirculated
to allow a build-up of ammonium sulfate until a portion of
the salt may be crystallized. Mother liquor is then
fortified with acid and recycled. Such a process is
exemplified by U.S. Patent Nos. 3,754,376, and 3,920,419.

Phosphoric acid has also been used as an absorbing solution for ammonia. Ammonium phosphate can be removed
as a product, or the acid can be regenerated by heating
the ammonium phosphate solutions to liberate gaseous ammonia

CASE: 4572-A

which is recovered as aqueous ammonia liquor or anhydrous ammonia. Such processes are described in Rice U.S. Patent No. 3,024,090, issued March 6, 1962; Fields et al. U.S. Patent No. 3,186,795, issued June 1, 1965; and Rice et al. U.S. Patent No. 3,985,863, issued October 12, 1976.

CH2M Hill Inc. German Application 2,455,233, published August 14, 1975, shows removal of ammonia from wastewaters by stripping with air followed by absorption of gaseous ammonia into an acid solution. The air is recirculated in a closed loop, and the absorbent solution is periodically removed to recover the ammonium salt. In the system of the German application the absorber and stripper temperatures are uncontrolled and essentially identical, and the gas leaving the absorber is saturated with water vapor. Such a system requires a low salt concentration (7-10%) in the absorbent to circumvent dehumidification effects and results in overall inefficiencies in energy.

As disclosed in the prior art, the temperature in closed cycle air stripping is maintained by addition of steam to the air prior to its entering the stripper. The purpose is to saturate the air and increase its enthalpy in order to obtain the desired stripping temperature. The high steam requirement results in a high energy cost.

Another disadvantage of the prior art processes is that no definite temperature control is practiced in the absorption tower operation, relative to the temperature in the stripper. When absorption is performed at temperatures equal to or lower than that employed for stripping, substantial quantities of moisture will be absorbed along with ammonia in the absorber. This dilutes the absorption medium and increases energy requirements in the successive stages of processing.

The present invention provides a process for more energy efficient and more effective ammonia removal from aqueous wastes than is realized by the prior art processes.

An objective of the present invention is to provide an improved continuous process for effectively removing free and fixed ammonia from aqueous liquors, said process characterized by low energy requirements and low operating costs.

The above objectives are accomplished in a continuous process comprising the steps of:

a. adjusting the pH of the aqueous ammonia liquor to pH 9-12;

b. separating ammonia from the liquor in step (a) by counterflowing an inert gas in a stripper tower, the stripping temperature being in the range of 70-185°F. and the pressure being at or near atmospheric conditions;

c. removing ammonia from the inert gas of step (b) by contact with an absorption by an aqueous acidic solution in an absorption tower to form an ammonium salt, the absorption tower being maintained at a temperature such that the water vapor concentration in the inert gas leaving the absorber is either equal to or higher than the saturation water vapor concentration in the inert gas at the temperature of the stripping tower in step (b);

d. adding additional aqueous acid to the absorption tower as needed, and withdrawing from the absorption tower a portion of the aqueous acidic solution containing ammonium salt, the quantity of said portion being controlled to maintain the ammonium salt concentration in the solution in the absorption tower at at least 80 percent of saturation; and

e. recycling the inert gas from the absorber to the stripper to perform continuous ammonia separation in a closed system.

The temperature differential between the stripper and the absorber is preferably maintained such that there is no net transfer of heat or water vapor between the stripper and the absorber. Alternately, heat and water vapor may be transferred from the absorber to the stripper.

-4-

These conditions are realized by maintaining the temperature in the absorber higher than the temperature in the stripper. The temperature differential is preferably in the range between 1 and 36°F.

The identity of the inert gas is not critical, although air or nitrogen are preferred for economic reasons.

The aqueous acidic solution can be derived from any acid which will readily absorb ammonia. Preferred acids are sulfuric and phosphoric acids because of their efficiency and ready availability.

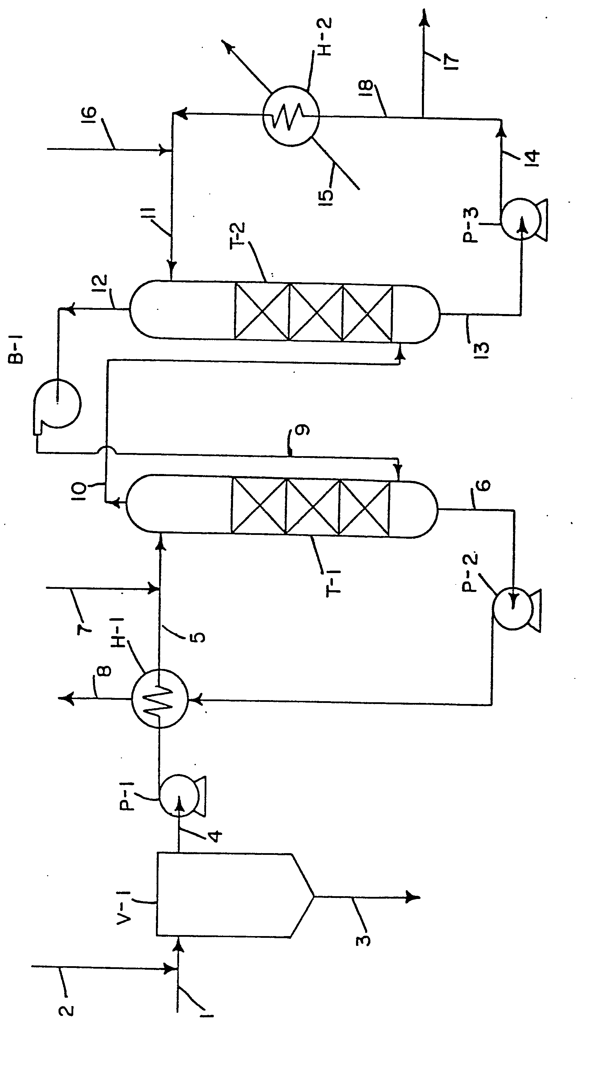

The single figure of the drawing shows an exemplary flow diagram for the process of the invention.

A complete understanding of the invention may be obtained from the following detailed description of the process.

Referring to the drawing, a lime slurry 2 is introduced into an ammonia containing liquor 1 to maintain a desired pH. The lime treated liquor is introduced into a settling chamber V-1. The solids settled at the bottom of settling chamber V-1 are sent to disposal 3 and the overflow 4 is transferred by pump P-1 to the optional heat exchanger H-1 and then to the top of stripping tower T-1 through line 5. If necessary, steam 7 can be added to the overflow liquor 4 to attain the desired temperature.

In the present invention the pH of the ammonia liquor and the temperature of the stripping tower are maintained such that effective ammonia separation is achieved economically, with no added steam cost. The preferred pH range is 9.0-12.0 and the temperature range is 70-185°F.

In the preferred practice of the present invention, where the pH of the waste is adjusted by lime the cost of pH adjustment is low and the cost of readjusting the pH of the effluent liquor 8 prior to discharge will be minimal because of the low solubility of lime. Another advantage of lime addition is that it facilitates the separation of suspended and coagulated solids often present in the waste.

Although pH adjustment by lime is preferred, other alkaline substances such as sodium hydroxide can also be effectively used.

As shown in the drawing, inert gas 9 is introduced at the bottom of stripping tower T-1, countercurrent to the flow of ammonia liquor 5. The stripping tower T-1 can be of any known design capable of providing efficient gas-liquid contact. The preferred types are packed towers and columns with perforated trays or bubble cap trays. The ammonia lean liquor 6 from the bottom of stripping tower T-1 is pumped by pump P-2 into the heat exchanger H-1 where it preheats the incoming cold liquor 4. The lean ammonia liquor 8 is then sent to disposal.

The ammonia containing gas 10 from the top of stripping tower T-1 is passed through absorption tower T-2 where essentially complete extraction of ammonia from the gas 10 is achieved by counterflowing an aqueous acidic solution 11. The gas 10 is introduced at the bottom of absorption tower T-2 while the acidic solution 11 is introduced at the top of the tower T-2. The gas 12 from the top of T-2 is recycled to stripping tower T-1 by blower B-1 to perform the ammonia removal in a closed stripping gas cycle.

The absorbing tower T-2 can be of any known design capable of providing efficient gas-liquid contact. The absorber T-2 is operated at a temperature higher than the temperature in stripping tower T-1. This is done to eliminate the added step of saturating the gas with added steam prior to its entering stripper T-1. The heat of reaction of ammonia with acid will result in excess heat in the absorber T-2. However, the gas leaving the absorber T-2 is unsaturated with respect to its maximum moisture holding capacity at the gas temperature. This is caused by dehumidification during scrubbing with the acidic solution. In the prior art, steam is added to saturate and heat the gas 9 prior to stripping.

At a given temperature the partial pressure of water vapor in the recirculating gas is lower at the absorber discharge compared to that at the stripper discharge. When both stripping and absorption are performed at the same temperature a portion of the water vapor in the gas leaving the stripper is condensed in the absorber. When the absorber $T_2$ is at a temperature lower than the stripper $T_1$ more water vapor is condensed in the absorber. The net result of this is substantial steam cost to evaporate the water from the product ammonium salt. This is in addition to the steam that has to be supplied to maintain the stripper $T_1$ temperature and to saturate the gas $9$ that enters the stripper.

In the present invention the temperature in absorber $T_2$ is maintained such that the water vapor content of the gas leaving the absorber is either equal to or higher than the saturation water vapor concentration of the gas at the stripper temperature. The temperature differential that has to be maintained between the absorber $T_2$ and the stripper $T_1$ depends on the operating conditions in the stripper and on the properties of the acidic solution used for absorption. The required temperature differential can readily be calculated from the physical properties of the system or determined by simple experimentation involving measurement of the water vapor content of the gas leaving the absorber at varying temperatures.

Referring back to the drawing, the ammonia rich liquor from the bottom of absorber $T_2$ flows into pump $P_3$ via line 13. The discharge 14 from pump $P_3$ is split into two streams. A portion 17 is sent to ammonium salt recovery or to acid regeneration if a regenerative acid cycle using acids such as phosphoric acid is used for absorption. The second portion 18 of absorbing liquor from pump $P_3$ flows through cooler $H_2$, where cooling water 15 reduces the temperature of absorbing liquor 11 entering the absorber $T_2$. Make-up acid or regenerated acid 16 is mixed with the discharge from cooler $H_2$ and the resulting solution 11 is sent to the top of absorber $T_2$.

The solution 11 used for absorption of ammonia in

absorber $T_{\sim}2$ can be of any acid capable of reacting with ammonia to form fixed ammonium salts such as sulfuric acid or phosphoric acid. When sulfuric acid is used for absorption ammonium sulfate is produced. The acid is used once through the process, and make-up acid must be added to the system.

When phosphoric acid is used as the absorbing solution ammonium phosphate can be taken out as product. Alternatively, the acid can be regenerated by heating the ammonium phosphate solutions to liberate gaseous ammonia. If a regenerative phosphoric aicd cycle is used for absorption, ammonia is recovered as aqueous ammonia liquor or anhydrous ammonia.

High salt concentration, i.e., at least 80 percent of saturation is maintained in the acidic absorber solution by controlling the stripper and absorber temperatures to achieve no net water transfer from the stripper to the absorber. Water taken from the absorber in portion $1_{\sim}7$ is replaced by water associated with make-up acid or regenerated acid $1_{\sim}6$.

The dehumidification effect in the absorber is magnified by the high salt concentration; nevertheless, the temperature difference between absorber and stripper maintains the proper water balance necessary to effect efficient ammonia removal at minimal cost.

## Example 1

A coke oven flushing liquor contains 3.0 grams per liter of ammonia, which is removed by stripping with recycled air and subsequently absorbing from the air into an aqueous solution of ammonium sulfate and sulfuric acid having a salt concentration of approximately 40 percent. The influent flushing liquor temperature is 68°F. The influent liquor is heated to approximately 130°F. by heat exchange with the hot effluent stripped liquor. The influent liquor is further heated to 150°F. by direct injection of steam.

The stripping conditions are set at 150°F. and 70 cubic feet of air per gallon of influent flushing liquor. The pH of the flushing liquor is controlled at pH 11.5. Under these conditions approximately 99.5 percent of the ammonia is stripped from the flushing liquor.

For a system of the drawing treating 150 gallons of flushing liquor per minute, the air rate of 70 cubic feet per gallon of liquor is, on a weight basis, 684 pounds per minute. The air at the stripper discharge contains approximately 3.7 pounds of ammonia per minute and carries about 144 pounds of water vapor per minute. About 21.5 pounds per minute of direct steam is added to raise the influent temperature to 150°F. The advantages of operating according to the present invention are seen in the following comparison.

According to the present invention, the absorber temperature is maintained at about 158°F., where under equilibrium conditions the amount of water vapor, i.e. 144 pounds, carried from the absorber to the stripper equals that carried from the stripper to the absorber.

In this case the heat of reaction in the absorber is in excess of that required to maintain the absorber temperature at 158°F. The excess energy is partially removed in the ammonium sulfate slurry 17 withdrawn from the recirculation system for recovery of the salt. Additional energy may be removed in the cooler H-2.

The advantages of this invention are apparent by comparing it with a prior art process operating at an absorber T-2 temperature of 122°F. At this condition, the air 12 leaving the absorber T-2 contains about 48.6 pounds of water vapor per minute. Thus 95.4 pounds of the 144 pounds per minute of water vapor carried by the air from the stripper are condensed and removed in the absorber. This excess water must subsequently be evaporated from the absorbing liquor to recover the ammonium sulfate. If it is assumed that one pound of steam will evaporate one pound of water from the ammonium sulfate solution, 95.4 pounds of steam are required per minute.

-9-

Additionally, another 95.4 pounds of water vapor must be introduced as steam into the air Ω to saturate it at the stripping column temperature and pressure.

Thus, operating the system by the prior art process requires additional steam of 169.3 pounds per minute. At a cost of $5.00 per 1000 pounds of steam, the additional energy cost is $5.64 per thousand gallons of flushing liquor treated, or $1220 per day. These costs can be eliminated by maintaining the absorber top temperature at about 158°F.

## Example 2

Ammonia in the coke oven flushing liquor of Example 1 is removed by stripping with recycled air and subsequently absorbing from the air into a 40 percent solution of ammonium acid phosphate. The molar ratio of ammonia to phosphoric acid in the absorbing solution is approximately 1.0. The influent flushing liquor temperature is 68°F. The influent liquor is heated to approximately 130°F. by heat exchange with the hot effluent stripped liquor. The influent liquor is further heated to 150°F. by direct injection of steam prior to ammonia removal in the stripper.

The stripping conditions are set at 150°F. and 70 cubic feet of air per gallon of influent flushing liquor. The pH of the flushing liquor is controlled at pH 11.5. At these conditions approximately 99.5 percent of the ammonia is stripped from the flushing liquor.

For a system of the drawing treating 150 gallons of flushing liquor per minute, the air rate of 70 cubic feet per gallon of liquor is, on a weight basis, 684 pounds per minute. The air at the stripper discharge contains approximately 3.7 pounds of ammonia per minute and carries about 144 pounds of water vapor per minute. About 21.5 pounds per minute of direct steam is added to raise the influent liquor temperature to 150°F.

The advantages of operating according to the present invention are seen in the following comparison.

-10-

According to the present invention, the absorber temperature is maintained at about 155°F., where under equilibrium conditions the amount of water vapor, i.e. 144 pounds, carried from the absorber to the stripper equals that carried from the stripper to the absorber.

In this case the heat of reaction in the absorber is lower than that in Example 1, though yet in excess of that required to maintain the absorber temperature at about 155°F. The excess energy is removed as in Example 1, that is by withdrawing a portion 17 of the absorbing liquor and/or by passage through cooler H-2.

The advantages of this invention are obvious by comparing it with a prior art process operating at an absorber T-2 temperature of 122°F. At this condition, the air 12 leaving the absorber T-2 contains about 50.0 pounds of water vapor per minute. Thus 94.0 pounds of the 144 pounds per minute of water vapor carried by the air from the stripper are condensed and removed in the absorber. This excess water must subsequently be evaporated from the absorbing liquor to restore it to its original concentration of 40 percent ammonium phosphate. If it is assumed that one pound of steam will evaporate one pound of water from the ammonium phosphate solution, 94.0 pounds of steam are required per minute.

Additionally, another 94.0 pounds of water vapor must be introduced as steam into the air 9 to saturate it at the stripping column temperature and pressure.

Thus, operating the system by this prior art process requires additional steam of 94.0 + (94.0 - 21.5) pounds, for a total of 166.5 pounds per minute. At a cost of $5.00 per 1000 pounds of steam, the additional energy cost is $5.55 per thousand gallons of flushing liquor treated, or $1200 per day. These costs can be eliminated by maintaining the absorber top temperature at about 155°F.

1.      A continuous process for removal and recovery of ammonia from aqueous ammonia containing liquors which comprises:

a. adjusting the pH of the ammonia containing liquor to pH 9 to 12;

b. separating ammonia from the liquor of step (a) by counter-flowing an inert gas in a stripping tower, the stripping temperature being in the range of 70 to 185°F. and the pressure being at or near atmospheric conditions;

c. removing ammonia from the inert gas of step (b) by contact with and absorption by an aqueous acidic solution in an absorption tower to form an ammonium salt, the absorption tower being maintained at a temperature such that the water vapor concentration in the inert gas leaving the absorber is either equal to or higher than the saturation water vapor concentration in the inert gas at the temperature of the stripping tower in step (b);

d. thereafter recycling the inert gas from the absorber to the stripper to perform continuous ammonia separation in a closed system.

2.      A process according to claim 1, which includes additional aqueous acid to the absorption tower as needed, and withdrawing from the absorption tower a portion of the aqueous acidic solution containing ammonium salt, the quantity of said portion being controlled to maintain the ammonium salt concentration in the solution in the absorption tower at least 80 percent of saturation.

3.      A process according to claim 1 or 2 wherein the water vapor concentration in the circulating inert gas is maintained substantially constant throughout the entire process by maintaining the top of the absorber at a temperature higher than the temperature at the top of the stripper, said temperature being that at which the water vapor concen-

CASE 4572-B

tration in the inert gas leaving the absorber is equal to the saturation water vapor concentration in the inert gas at the temperature of the stripping tower.

4. A process according to any one of the preceding claims, wherein the temperature of the inert gas leaving the absorber is 1 to 36°F. higher than the temperature of the inert gas leaving the stripper.

5. A process according to any one of the preceding claims, wherein the acid in the aqueous acidic absorbing solution is sulfuric acid.

6. A process according to any one of claims 1 to 4, wherein the acid in the aqueous acidic absorbing solution is phosphoric acid.

European Patent Office

**EUROPEAN SEARCH REPORT**

Application number

EP 80 10 6871.9

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| D | <u>DE - A1 - 2 455 233</u> (CH2M HILL)<br>-- | | C 01 C  1/10 |
| D | <u>US - A - 3 985 863</u> (RICE et al.)<br>-- | | |
| D | <u>US - A - 3 920 419</u> (SCHROEDER et al.)<br>-- | | |
| D | <u>US - A - 3 754 376</u> (KENT)<br>-- | | |
| D | <u>US - A - 3 186 795</u> (FIELDS et al.)<br>-- | | |
| D | <u>US - A - 3 024 090</u> (RICE)<br>-- | | TECHNICAL FIELDS SEARCHED (Int. Cl.³) |
| A | <u>US - A - 3 826 815</u> (MAVROVIC)<br>-- | | B 01 D 19/00<br>B 01 D 53/00<br>C 01 C  1/00 |
| A | <u>DE - C - 1 036 237</u> (PAULING)<br>---- | | |

CATEGORY OF CITED DOCUMENTS

X: particularly relevant
A: technological background
O: non-written disclosure .
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search<br>Berlin | Date of completion of the search<br>24-02-1981 | Examiner<br>KESTEN | |

EPO Form 1503.1  06.78